# EUROPÄISCHE PATENTANMELDUNG

(11) **EP 1 060 966 A2**
(43) Veröffentlichungstag der Anmeldung: **20.12.2000**
(21) Anmeldenummer: 00112645.7
(22) Anmeldetag: 15.06.2000
(51) Int. Cl.: B60T 13/68, B60T 8/32, B60T 8/18

(54) **Anhängerbremsventil für blockiergeschützte Druckluftbremsanlagen von Anhängern**

(30) Priorität: 19.06.1999 DE 19928113
(71) Anmelder: Haldex Brake Products GmbH, 69123 Heidelberg (DE)
(72) Erfinder: Sulzyc, Georg, 69214 Eppelheim (DE)
(74) Vertreter: Patentanwälte Rehberg + Hüppe

(57) **Zusammenfassung**

Ein Anhängerbremsventil (1) für den Einbau in Druckluftbremsanlagen von Anhängern mit ABS- und ALB-Steuerung ist mit einem in einem Gehäuse (2) geführten Relaiskolben (3) versehen, der eine Steuerkammer (4) und eine Bremskammer (5) im Gehäuse (2) abteilt. Eine Bremsleitung (7) ist mit der Steuerkammer (4) verbunden. Die Bremskammer (5) ist mit Anschlüssen (31) für zu den Bremszylindern (33) führende Leitungen versehen. Das Anhängerbremsventil (1) weist ein an eine Vorratskammer (47) angrenzendes Einlaßventil (43, 51), ein Auslaßventil (43, 54), eine eigenständige Steuerelektronik (22), ein erstes Magnetventil (8) in der zu der Steuerkammer (4) des Relaiskolbens (3) geführten Bremsleitung (7) und ein zweites Magnetventil (18) zur gezielten Entlüftung der Steuerkammer (4), einen Druck/-Spannungswandler (16) zum Erfassen des in der Bremsleitung (7) herrschenden Steuerdrucks und einen Druck/Spannungswandler (17) zum Erfassen des Drucks vor oder nach dem Relaiskolben (3) auf. Es ist mit einer Einrichtung (26) zur Einsteuerung eines ALB-Signals versehen. Die Steuerelektronik (22) ist für die Ansteuerung der beiden Magnetventile (8, 18) ausgebildet und berücksichtigt dabei allein das ALB-Signal von der Einrichtung (26).

## Beschreibung

Die Erfindung betrifft ein Anhängerbremsventil für den Einbau in Druckluftbremsanlagen von Anhängern, mit ABS- und ALB-Steuerung.

Bei einem solchen Anhängerbremsventil handelt es sich bekanntlich um ein nach Art eines Relaisventils ausgebildetes Steuerventil, welches auf dem Anhänger angeordnet wird. Das Anhängerbremsventil dient zur Aussteuerung eines Bremsdruckes im Bereich der Bremse des Anhängers.

Auch der Anhänger weist eine ABS-Anlage auf. Außerdem besitzt der Anhänger zumindest einen Sensor in irgendeiner Form, der den Beladungszustand des Anhängers widerspiegelt bzw. ein entsprechendes Signal bereitstellt. Wenn der Anhänger mit einer Luftfederung versehen ist, kann in der einfachsten Form ein Sensor vorgesehen sein, der den Druck in einer Fülleitung zu einem Luftfederbalg sensiert.

Ein Anhängerbremsventil der eingangs beschriebenen Art ist aus der DE 35 19 182 C2 bekannt. Das Anhängerbremsventil weist einen in einem Gehäuse geführten Relaiskolben auf, der in dem Gehäuse eine Steuerkammer und eine Bremskammer abteilt. Die Anhängerbremsleitung ist zu dieser Steuerkammer herangeführt. Die Bremskammer ist mit Anschlüssen für Leitungen versehen, die zu den Bremszylindern führen.

Wie an sich bei jedem Anhängerbremsventil üblich, ist ein Einlaßventil und ein Auslaßventil vorgesehen, die über einen gemeinsamen Doppelventilkörper verfügen. Das Einlaßventil grenzt an eine Vorratskammer an, die mit der Vorratsleitung zum Anhänger und einem Vorratsbehälter auf dem Anhänger in dauernder Verbindung steht.

Das Anhängerbremsventil weist auch eine ABS-Steuerelektronik auf, die in dem Gehäuse des Anhängerbremsventils integriert untergebracht ist. Es ist ein Druck/Spannungswandler zum Erfassen des in der Bremsleitung herrschenden Steuerdrucks vorgesehen, der zur Signalübermittlung elektrisch mit der ABS-Steuerelektronik verbunden ist. Das bekannte Anhängerbremsventil weist auch ein Magnetventil auf. Dieses ist in der zu der Steuerkammer des Relaiskolbens herangeführten Bremsleitung vorgesehen und besitzt eine besondere Ausbildung.

Das Magnetventil kann drei verschiedene Stellungen einnehmen. In der nicht erregten Stellung gibt es den Durchgang in der Bremsleitung zu der Steuerkammer des Relaiskolbens frei. In einer ersten erregten Stellung wird dieser Durchgang abgesperrt und eine zu einem Expansionsraum führende Leitung abgesperrt. In einer zweiten erregten Stellung wird die Bremsleitung eingangsseitig ebenfalls abgesperrt, jedoch die Verbindung zu dem Expansionsraum freigegeben, so daß in der Steuerkammer eine entsprechende Druckerniedrigung stattfindet. Der Expansionsraum kann über eine Drosselbohrung mit der Atmosphäre verbunden sein.

Das bekannte Anhängerbremsventil weist auch eine Anlenkung für ein ALB-Signal auf, verfügt also über den Anschluß eines mechanischen Stelltriebes, dessen Stellungssignal der ABS-Steuerelektronik zugeführt wird, so daß das Magnetventil bzw. dessen Einlaß in Stufen entsprechend dem jeweiligen Beladungszustand des Anhängers geschlossen wird. Durch die Verbindung der Steuerkammer mit dem Expansionsraum kann eine gezielte Druckerniedrigung um eine entsprechende Stufe stattfinden. Die Größe bzw. Bemessung dieser Stufe ist von der Größe des Expansionsraums abhängig.

Eine solche einstufige Erniedrigung des Steuerdruckes durch Verbindung der Steuerkammer mit dem Expansionsraum kann in vielen Fällen ungenügend sein. Auch der Anschluß des Expansionsraumes über eine Drosselbohrung an die Atmosphäre führt zwar dazu, daß der Druck im Expansionsraum abgebaut wird. Oft erfolgt dieser Druckabbau jedoch zu langsam, um die Blockiergrenze im ABS-Betrieb zu unterschreiten.

Das bekannte Anhängerbremsventil hat den weiteren Nachteil, daß z. B. bei Ausfall der Stromversorgung der ABS-Steuerelektronik auch die Auswirkung des ALB-Signals wegfällt, d. h. der Anhänger wird in einem solchen Falle nur noch rein pneumatisch gesteuert gebremst. Dabei besteht die Gefahr der Überbremsung des Anhängers bzw. des Blockierens der Räder des Anhängers.

Aus der DE 44 25 789 A1 ist eine Bremsanlage für pneumatisch gebremste Anhänger bekannt, die eine ABS-Steuerung mit einer Steuerelektronik umfaßt, die nicht nur ABS-Signale, sondern zusätzlich auch ALB-Signale verarbeitet. Bei einer Unterbrechung der Spannungsversorgung dieser Steuerelektronik oder eines entsprechenden Defektes innerhalb der Steuerelektronik verschwindet sowohl der Einfluß des ABS-Signales wie auch des ALB-Signales.

Wenn in einem solchen Defektfall ein Bremssignal von dem Anhänger-Steuerventil auf dem Zugfahrzeug auf den Anhänger durchgesteuert wird, unterbleibt jegliche Anpassung des Anhänger-Bremsdruckes an die Gegebenheiten des Fahrbetriebes. Die Betriebsgefahr wird wesentlich erhöht.

Weiterhin ist es bekannt, bei Relaisventilen, die in Verbindung mit einer ABS-Steuerelektronik betrieben werden, sei es auf dem Zugfahrzeug, sei es auf dem Anhänger, zwei Magnetventile anzuordnen, wobei das eine Magnetventil zur gezielten Belüftung der Steuerkammer des Relaisventils und das zweite Magnetventil zur gezielten Entlüftung der Steuerkammer des Relaisventils dient.

Die Verwendung von zwei Magnetventilen auf einem Relaisventil ist immer angezeigt, wenn es um die typische Verarbeitung eines ABS-Signales geht, bei dem der Druck in der Steuerkammer des Relaisventils entweder erhöht, erniedrigt oder für begrenzte Zeit konstant gehalten werden soll.

Der Erfindung liegt die Aufgabe zugrunde, ein Anhängerbremsventil zu schaffen, welches bei Ausfall der Spannungsversorgung einer ABS-Anlage oder einer sonstigen Störung im Bereich der ABS-Steuerelektronik eine erhöhte Sicherheit hinsichtlich der Aussteuerung eines wenigstens an den Beladungszustand des Anhängers angepaßten Bremsdruckes ermöglicht.

Erfindungsgemäß wird dies bei einem Anhängerbremsventil mit den Merkmalen des Patentanspruches 1 erreicht.

Die Erfindung geht von dem Gedanken aus, in einer Druckluftbremsanlage von Anhängern mit ABS- und ALB-Steuerung die Verarbeitung des ABS-Signales einerseits und des ALB-Signales andererseits voneinander zu trennen und das Anhängerbremsventil mit einer eigenständigen Steuerelektronik auszurüsten, die nur zur Verarbeitung von ALB-Signalen ausgebildet und bestimmt ist.

Dabei wird auch das Anhängerbremsventil mit zwei Magnetventilen ausgerüstet, von denen das erste Magnetventil der gezielten Belüftung der Steuerkammer und das zweite Magnetventil der gezielten Entlüftung der Steuerkammer zugeordnet ist. Damit wird eine große Bandbreite möglicher Steuerphilosophien an dem Anhängerbremsventil eröffnet.

Die Bremsvorgänge können in Abstimmung auf die Blockierbedingungen ausgelegt werden. Auch der Druck vor oder nach dem Relaiskolben, also in der Steuerkammer oder in der Bremskammer, wird überwacht und als Einflußgröße in der Steuerelektronik verarbeitet. Das Anhängerbremsventil besitzt eine eigene Steuerelektronik. Die ABS-Anlage weist eine ABS-Steuerelektronik auf.

Wenn also ein solches Anhängerbremsventil in Verbindung mit einer ABS-Anlage an einem Anhänger eingesetzt wird, entsteht der besondere Vorteil, daß selbst dann, wenn die Stromversorgung der ABS-Anlage ausfällt oder dort eine sonstige Störung eintritt, die ALB-Funktion erhalten bleibt, d. h. das ALB-Signal verliert seinen Einfluß auf den ausgesteuerten Bremsdruck am Anhängerbremsventil nicht.

Für die Verarbeitung des ALB-Signals ergeben sich verschiedene Möglichkeiten. So kann die Einrichtung zur Einsteuerung des ALB-Signals einen Druck/Spannungswandler aufweisen, der pneumatisch mit einem Luftfederbalg und elektrisch mit der Steuerelektronik des Anhängerbremsventils verbunden ist. Voraussetzung hierfür ist ein mit einer Luftfederungsanlage ausgestatteter Anhänger bzw. eine entsprechende Ausrüstung des Anhängers.

Es genügt, wenn das erste Magnetventil zwei Stellungen aufweist, wobei der Durchgang in der Bremsleitung zum Relaiskolben in der ersten Stellung freigegeben und in der zweiten Stellung abgesperrt wird. Das zweite Magnetventil sollte eine eigene Entlüftung und zwei Stellungen aufweisen, wobei die Entlüftung in der ersten Stellung abgesperrt und in der zweiten Stellung freigegeben wird. Diese beiden Magnetventile ermöglichen Steuerkurven unterschiedlicher Ausprägung mit jeweils speziellen Vorteilen.

Insbesondere besteht weiterhin die Möglichkeit, daß die Steuerelektronik des Anhängerbremsventils einen Anschluß für eine zu einem Steuerventil einer Liftachse führende elektrische Leitung aufweist. Damit läßt sich über das Anhängerbremsventil zugleich die Liftachse eines Anhängers steuern. Das ALB-Signal wird unmittelbar für diese Aussteuerung eingesetzt. Das Steuerventil in der elektrischen Leitung kann als ein 5/2-Wegeventil ausgebildet sein, über das sowohl die Luftfederbälge der Liftachse als auch der Liftbalg der Liftachse steuerbar sind. Das 5/2-Wegeventil besitzt einen Anschluß für die Druckluftversorgung, eine eigene Entlüftung und einen Anschluß für eine mit den Luftfederbälgen der anderen Achse verbundene pneumatische Verbindungsleitung.

Die Steuerelektronik des Anhängerbremsventils kann frei programmierbar ausgebildet sein. Damit eröffnet sich beispielsweise die Möglichkeit, für einen normalen Betriebszustand das ALB-Signal entsprechend zu verarbeiten. Bei Wegfall des ALB-Signals kann die Umschaltung in eine Notfallebene, also z. B. auf Halblast, erfolgen.

Weiterhin besteht die Möglichkeit, daß das Anhängerbremsventil zur Anzeige eines Ausfalls der Steuerelektronik des Anhängerbremsventils oder bei sonstigen Störungen eine Warnleuchte ansteuert. Diese Warnleuchte ist so anzubringen, daß der Fahrer das entsprechende Signal wahrnehmen kann. Unter einer sonstigen Störung kann beispielsweise die Überladung des Anhängers verstanden werden.

Die Erfindung wird anhand eines bevorzugten Ausführungsbeispiels weiter verdeutlicht und beschrieben. Es zeigen:
- Fig. 1: einen Schnitt durch das Anhängerbremsventil in drucklosem Zustand, und
- Fig. 2: eine Bremsanlage eines Anhängers mit Liftachse und dem Anhängerbremsventil gemäß Fig. 1.

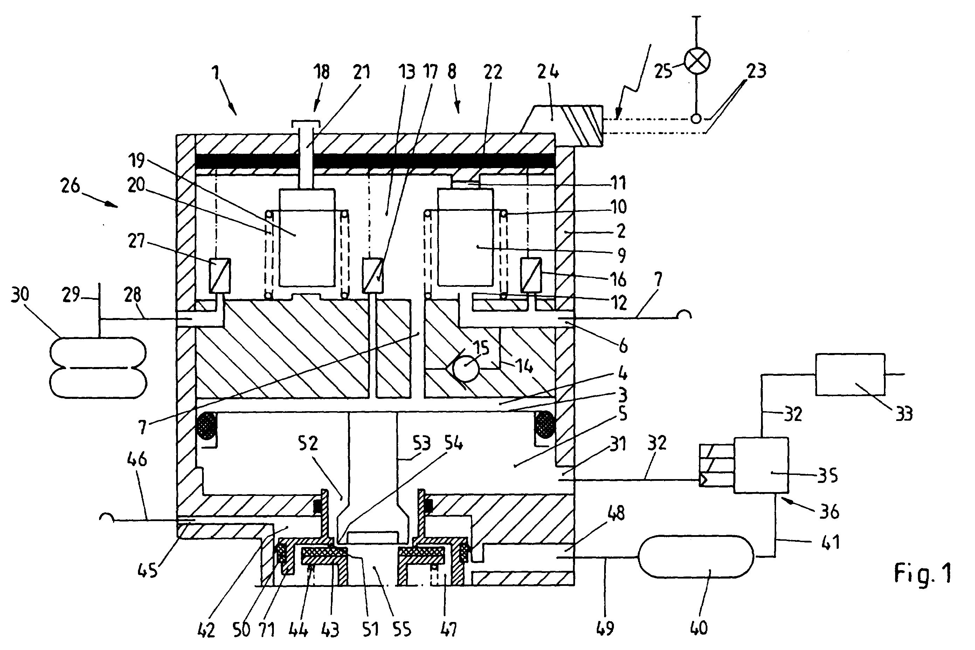

In Fig. 1 ist ein Vertikalschnitt eines Anhängerbremsventils 1 dargestellt. Das Anhängerbremsventil 1 weist ein Gehäuse 2 auf, in welchem ein Relaiskolben 3 gleitend und dichtend verschieblich geführt ist. Der Relaiskolben 3 teilt im Gehäuse 2 eine Steuerkammer 4 von einer Bremskammer 5 ab. Das Gehäuse 2 besitzt einen Anschluß 6 für die Bremsleitung 7 des Anhängers. Auf diese Weise ist die Bremsleitung 7 mit der Steuerkammer 4 verbunden. In der Bremsleitung 7 ist ein erstes Magnetventil 8 angeordnet, welches in dem Gehäuse 2 des Anhängerbremsventils 1 untergebracht oder zumindest an das Gehäuse 2 angeflanscht ist. Das erste Magnetventil 8 besitzt keine eigene Entlüftung. Es weist einen Ventilmagneten 9 auf, der auf einer Feder 10 abgestützt ist, so daß in der nicht erregten Stellung der Ventilmagnet 9 gegen einen Anschlag 11 am Gehäuse 2 anliegt, so daß in der Bremsleitung 7 zu der Steuerkammer 4 Durchgang herrscht. Es versteht sich anhand der zeichnerischen Darstellung der Fig. 1, daß das erste Magnetventil 8 in der anderen Stellung, in der es erregt ist, mit seinem Ventilmagnet 9 auf einen Durchgangssitz 12 drückt und in dieser Stellung den Durchgang in der Bremsleitung 7 zu der Steuerkammer 4 absperrt. Die Bremsleitung 7 steht in der nicht erregten Stellung des Magnetventils 8 mit einem Steuerraum 13 in dem Gehäuse 2 des Anhängerbremsventils 1 in Verbindung. Dieser Steuerraum 13 steht über den zweiten Teil der Bremsleitung 7, die unmittelbar zur Steuerkammer 4 führt, in dauernder Verbindung. Die beiden Teile der Bremsleitung 7 vor und nach dem ersten Magnetventil 8 sind über eine Umgehungsleitung 14 verbunden, in der ein Rückschlagventil 15 in der dargestellten Richtung angeordnet ist. Die Umgehungsleitung 14 dient dem Entlüften der Steuerkammer 4 über die Bremsleitung 7 für den Fall, daß das erste Magnetventil 8 den Durchgang sperrt. An die Bremsleitung 7 ist ein Druck/Spannungswandler 16 angeschlossen, und zwar stromauf des ersten Magnetventils 8. Der Druck/Spannungswandler 16 dient zum Erfassen des Druckes in der Bremsleitung 7 zum Anhänger. Auch mit dem stromab des ersten Magnetventils 8 angeordneten Teil der Bremsleitung 7 bzw. mit der Steuerkammer 4 ist ein weiterer Druck/Spannungswandler 17 verbunden. Der Druck/Spannungswandler 17 erzeugt ein Signal entsprechend dem in der Steuerkammer 4 herrschenden Steuerdruck. Alternativ könnte der Druck/Spannungswandler 17 auch mit der Bremskammer 5 verbunden sein, um den Bremsdruck zu erfassen, der aussteuerseitig des Relaiskolbens 3 herrscht.

In oder an dem Gehäuse 2 des Anhängerbremsventils 1 ist ein zweites Magnetventil 18 vorgesehen, welches auch einen Ventilmagneten 19 aufweist, der auf einer Feder 20 abgestützt ist. Das zweite Magnetventil 18 besitzt eine eigene Entlüftung 21, also einen Anschluß an die Atmosphäre. In der nicht erregten Stellung sperrt das zweite Magnetventil 18 die Verbindung des Steuerraums 13 zur Atmosphäre ab. In der erregten Stellung stellt das Magnetventil 18 die Verbindung zwischen dem Steuerraum 13 und der Atmosphäre über seine eigene Entlüftung 21 her, so daß der Steuerraum 13 in dieser Stellung entlüftet wird.

Das Anhängerbremsventil 1 weist eine Steuerelektronik 22 auf, die nur schematisch angedeutet ist. Es handelt sich um eine elektronische Einrichtung, die zur Verarbeitung und Abgabe von Signalen der verschiedensten Art ausgebildet ist. Diese Steuerelektronik 22 ist zusätzlich zu einer ABS-Steuerelektronik einer ABS-Anlage vorgesehen, die ihrerseits an anderer Stelle der Bremsanlage untergebracht ist. Die elektrische Versorgung der Steuerelektronik 22 geschieht über elektrische Leitungen 23 und einen Stecker 24 am Gehäuse 2 des Anhängerbremsventils 1. An eine der Leitungen 23 kann eine Warnleuchte 25 angeschlossen sein, die in der Fahrerkabine des Zugfahrzeugs angeordnet ist und bei ihrem Aufleuchten dem Fahrer anzeigt, daß die elektrische Versorgung des Anhängerbremsventils 1 gestört bzw. unterbrochen ist.

In oder an dem Gehäuse 2 des Anhängerbremsventils 1 ist eine Einrichtung 26 zur Einsteuerung eines ALB-Signals vorgesehen. Wesentlicher Bestandteil dieser Einrichtung 26 ist ein Druck/Spannungswandler 27, der über eine pneumatische Leitung 28 an eine Leitung 29 angeschlossen ist, die zu einem Luftfederbalg 30 führt. Es versteht sich, daß in der Regel zwei Luftfederbälge 30 einer Tragachse des Anhängers vorgesehen sind. Sämtliche drei Druck/Spannungswandler 16, 17 und 27 sind über entsprechende elektrische Leitungen mit der Steuerelektronik 22 verbunden, so daß sie hierüber entsprechende elektrische Signale der jeweiligen erfaßten pneumatischen Drücke an die Steuerelektronik 22 abgeben. Der Druck in dem oder den Luftfederbälgen 30 ist ein Maß für die Beladung des Anhängers, so daß der Druck/Spannungswandler 27 ein ALB-Signal an die Steuerelektronik 22 weitergibt.

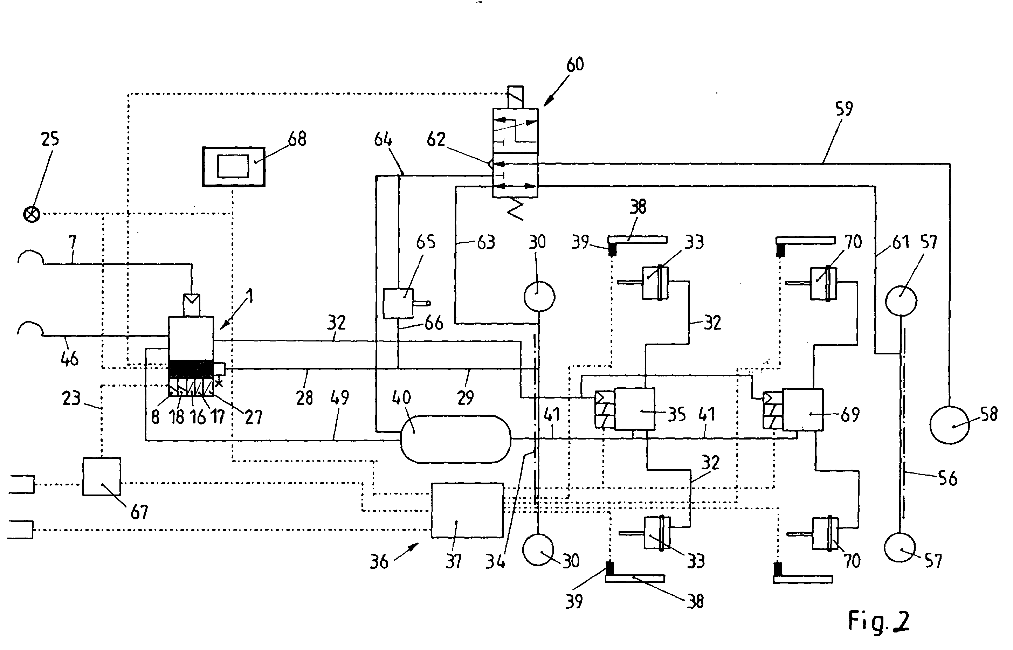

An dem Gehäuse 2 des Anhängerbremsventils 1 ist ein Anschluß 31 vorgesehen, der mit der Bremskammer 5 in ständiger Verbindung steht. An den Anschluß 31 ist eine pneumatische Leitung 32 angeschlossen, die entweder direkt zu einem oder mehreren Bremszylindern 33 der betreffenden Tragachse 34 des Anhängers führt. Es ist aber auch möglich, wie dargestellt, in der Leitung 32 ein ABS-Relaisventil 35 anzuordnen, welches zu einer ABS-Anlage 36 gehört. Die ABS-Anlage 36 (Fig. 2) weist in bekannter Weise eine ABS-Steuerelektronik 37, Polräder 38 und Drehzahlfühler 39 auf. Das ABS-Relaisventil 35 verfügt über eine eigene Druckluftversorgung. Ein Vorratsbehälter 40 auf dem Anhänger ist zu diesem Zweck über eine Leitung 41 an das ABS-Relaisventil 35 angeschlossen. Das ABS-Relaisventil 35 ist, wie dargestellt, sowohl elektrisch wie auch pneumatisch ansteuerbar. Die pneumatische Ansteuerung erfolgt über die Bremskammer 5. Die elektrische Ansteuerung über die ABS-Steuerelektronik 37.

Unterhalb des Relaiskolbens 3 ist eine Einströmkammer 42 vorgesehen, die von einem Notbremskolben 71 begrenzt wird. Unterhalb des Notbremskolbens 71 ist ein Doppelventilkörper 43 vorgesehen, der auf einer Feder 44 abgestützt ist. Die Einströmkammer 42 steht über einen Anschluß 45 in ständiger Verbindung mit einer Vorratsleitung 46 auf dem Anhänger. Unterhalb des Doppelventilkörpers 43 ist eine Vorratskammer 47 gebildet, die über einen Anschluß 48 und eine Leitung 49 in ständiger Verbindung mit dem Vorratsbehälter 40 steht. Der Notbremskolben 71 weist eine Überströmmanschette 50 auf, so daß es auf diesem Wege jederzeit möglich ist, Druckluft über die Vorratsleitung 46 in den Vorratsbehälter 40 einzubringen bzw. nachzufüllen.

Der Doppelventilkörper 43 bildet mit einem vorspringenden Rand 51 des Notbremskolbens 71 ein Einlaßventil 43, 51, über welches in geöffnetem Zustand Druckluft aus Vorratskammer 47 über eine ringförmige Durchbrechung 52 in die Bremskammer 5 und damit über die Leitung 32 zu den Bremszylindern 33 gelangen kann. Der Relaiskolben 3 besitzt einen Fortsatz 53 mit einem Rand 54, der zusammen mit dem Doppelventilkörper 43 ein Auslaßventil 43, 54 bildet. Der Doppelventilkörper 43 ist hohl ausgebildet und weist so eine Bohrung 55 auf, die an die Atmosphäre angeschlossen ist, so daß auf diesem Wege bei geöffnetem Auslaßventil 43, 54 die Bremskammer 5 entlüftet wird.

Wie Fig. 2 erkennen läßt, wird das Anhängerbremsventil 1 in einer Anlage eines Anhängers eingesetzt, die hier beispielhaft mit einer Tragachse 34 und einer Liftachse 56 ausgestattet ist. Die Liftachse 56 besitzt Luftfederbälge 57 und einen Liftbalg 58. Zu dem Liftbalg 58 ist eine pneumatische Leitung 59 geführt, die von einem Steuerventil 60 ausgeht, welches als 5/2-Wegeventil ausgebildet sein kann. Ebenso führt eine Leitung 61 von dem Steuerventil 60 zu den Luftfederbälgen 57 der Liftachse 56. Das Steuerventil 60 weist darüber hinaus auf der Anschlußseite eine eigene Entlüftung 62, einen Anschluß für eine Verbindungsleitung 63 zu den Luftfederbälgen 30 der Tragachse 34 sowie eine von dem Behälter 40 zur Druckluftversorgung herangeführte Leitung 64 auf. Über die Leitung 64 wird auch ein Luftfederventil 65 mit Druckluft versorgt, welches als Niveauregelventil fungiert und über eine Leitung 66 an die Leitungen 28 und 29 angeschlossen ist, so daß auf diesem Wege die Luftfederbälge 30 der Tragachse 34 mit Druckluft entsprechend dem Beladungszustand beschickt werden. Über die Leitung 28 steht an dem Anhängerbremsventil 1 bzw. an dem Druck/Spannungswandler 27 ein entsprechendes Drucksignal an, welches in ein elektrisches ALB-Signal umgewandelt und der Steuerelektronik 22 zugeführt wird.

Die in Fig. 2 dargestellte Anlage weist darüber hinaus eine elektrische Verteilerbox 67, eine Diagnosebox 68 sowie die dargestellten elektrischen Leitungsverbindungen auf, die strichpunktiert wiedergegeben sind, während pneumatische Leitungen in durchgezogener Linienführung verdeutlicht sind.

Es ist leicht vorstellbar, daß das Anhängerbremsventil 1 auch abweichend von der Darstellung der Fig. 2 in einer Anlage eingesetzt werden kann, die lediglich über eine oder mehrere Tragachsen 34 verfügt und keine Liftachse 56 aufweist. In diesem Fall ist das Steuerventil 60, die Leitung 63 sowie die doppelt wiedergegebenen nachgeschalteten Teile entbehrlich, auch ein zweites ABS-Relaisventil 69, welches Bremszylinder 70 der Liftachse 56 bedient. Zur Anordnung und Beschreibung des ALB-Relaisventils 69 der Liftachse 56 kann auf die Beschreibung des ALB-Relaisventils 35 verwiesen werden.

### BEZUGSZEICHENLISTE

- 1: - Anhängerbremsventil
- 2: - Gehäuse
- 3: - Relaiskolben
- 4: - Steuerkammer
- 5: - Bremskammer
- 6: - Anschluß
- 7: - Bremsleitung
- 8: - erstes Magnetventil
- 9: - Ventilmagnet
- 10: - Feder
- 11: - Anschlag
- 12: - Durchgangssitz
- 13: - Steuerraum
- 14: - Umgehungsleitung
- 15: - Rückschlagventil
- 16: - Druck/Spannungswandler
- 17: - Druck/Spannungswandler
- 18: - zweites Magnetventil
- 19: - Ventilmagnet
- 20: - Feder
- 21: - Entlüftung
- 22: - Steuerelektronik
- 23: - elektrische Leitung
- 24: - Stecker
- 25: - Warnleuchte
- 26: - Einrichtung
- 27: - Druck/Spannungswandler
- 28: - pneumatische Leitung
- 29: - Leitung
- 30: - Luftfederbalg
- 31: - Anschluß
- 32: - Leitung
- 33: - Bremszylinder
- 34: - Tragachse
- 35: - ABS-Relaisventil
- 36: - ABS-Anlage
- 37: - ABS-Steuerelektronik
- 38: - Polrad
- 39: - Drehzahlfühler
- 40: - Vorratsbehälter
- 41: - Leitung
- 42: - Einströmkammer
- 43: - Doppelventilkörper
- 44: - Feder
- 45: - Anschluß
- 46: - Vorratsleitung
- 47: - Vorratskammer
- 48: - Anschluß
- 49: - Leitung
- 50: - Überströmmanschette
- 51: - Rand
- 52: - Durchbrechung
- 53: - Fortsatz
- 54: - Rand
- 55: - Bohrung
- 56: - Liftachse
- 57: - Luftfederbalg
- 58: - Liftbalg
- 59: - Leitung
- 60: - Steuerventil
- 61: - Leitung
- 62: - Entlüftung
- 63: - Verbindungsleitung
- 64: - Leitung
- 65: - Luftfederventil
- 66: - Leitung
- 67: - Verteilerbox
- 68: - Diagnosebox
- 69: - ABS-Relaisventil
- 70: - Bremszylinder
- 71: - Notbremskolben

## Patentansprüche

1. Anhängerbremsventil (1) für den Einbau in Druckluftbremsanlagen von Anhängern mit ABS- und ALB-Steuerung, mit einem in einem Gehäuse (2) geführten Relaiskolben (3), der eine Steuerkammer (4) und eine Bremskammer (5) im Gehäuse (2) abteilt, wobei eine Bremsleitung (7) mit der Steuerkammer (4) verbunden und die Bremskammer (5) mit Anschlüssen (31) für zu den Bremszylindern (33) führende Leitungen versehen ist, mit einem an eine Vorratskammer (47) angrenzenden Einlaßventil (43, 51) und einem Auslaßventil (43, 54), mit einer eigenständigen Steuerelektronik (22), mit einem ersten Magnetventil (8) in der zu der Steuerkammer (4) des Relaiskolbens (3) geführten Bremsleitung (7) und einem zweiten Magnetventil (18) zur gezielten Entlüftung der Steuerkammer (4), mit einem Druck/Spannungswandler (16) zum Erfassen des in der Bremsleitung (7) herrschenden Steuerdrucks und einem Druck/Spannungswandler (17) zum Erfassen des Drucks vor oder nach dem Relaiskolben (3), und mit einer Einrichtung (26) zur Einsteuerung eines ALB-Signals, wobei die Steuerelektronik (22) für die Ansteuerung der beiden Magnetventile (8, 18) ausgebildet ist und dabei allein das ALB-Signal von der Einrichtung (26) berücksichtigt.

2. Anhängerbremsventil nach Anspruch 1, **dadurch gekennzeichnet**, daß die Einrichtung (26) zur Einsteuerung des ALB-Signals einen Druck/Spannungswandler (27) aufweist, der pneumatisch mit einem Luftfederbalg (30) und elektrisch mit der Steuerelektronik (22) verbunden ist.

3. Anhängerbremsventil nach Anspruch 1, **dadurch gekennzeichnet**, daß das erste Magnetventil (8) zwei Stellungen aufweist, wobei der Durchgang in der Bremsleitung (7) zum Relaiskolben (3) in der ersten Stellung freigegeben und in der zweiten Stellung abgesperrt wird.

4. Anhängerbremsventil nach Anspruch 1, **dadurch gekennzeichnet**, daß das zweite Magnetventil (18) eine eigene Entlüftung (21) und zwei Stellungen aufweist, wobei die Entlüftung (21) in der ersten Stellung abgesperrt und in der zweiten Stellung freigegeben wird.

5. Anhängerbremsventil nach Anspruch 1, **dadurch gekennzeichnet**, daß die Steuerelektronik (22) des Anhängerbremsventils (1) einen Anschluß für eine zu einem Steuerventil (60) einer Liftachse (56) führende elektrische Leitung aufweist.

6. Anhängerbremsventil nach Anspruch 5, **dadurch gekennzeichnet**, daß das Steuerventil (60) in der elektrischen Leitung als ein 5/2-Wegeventil ausgebildet ist, über das sowohl die Luftfederbälge (57) der Liftachse (56) als auch der Liftbalg (58) der Liftachse steuerbar sind.

7. Anhängerbremsventil nach Anspruch 1 oder 5, **dadurch gekennzeichnet**, daß die Steuerelektronik (22) des Anhängerbremsventils (1) frei programmierbar ausgebildet ist.

8. Anhängerbremsventil nach Anspruch 1, **dadurch gekennzeichnet**, daß das Anhängerbremsventil (1) zur Anzeige eines Ausfalls der Steuerelektronik (22) des Anhängerbremsventils oder bei sonstigen Störungen eine Warnleuchte (25) aufweist.
